(19) **Europäisches Patentamt / European Patent Office / Office européen des brevets**

(11) **EP 4 763 515 A1**

(12) # EUROPEAN PATENT APPLICATION
published in accordance with Art. 153(4) EPC

(43) Date of publication:
**24.06.2026 Bulletin 2026/26**

(21) Application number: **24900885.5**

(22) Date of filing: **07.11.2024**

(51) International Patent Classification (IPC):
**B32B 27/08** (2006.01)    **B32B 27/32** (2006.01)
**B32B 27/34** (2006.01)    **B32B 15/08** (2006.01)
**B32B 15/18** (2006.01)    **B32B 27/18** (2006.01)
**H01M 50/105** (2021.01)    **H01M 50/126** (2021.01)
**H01M 50/131** (2021.01)

(52) Cooperative Patent Classification (CPC):
**B32B 15/08; B32B 15/18; B32B 27/08;
B32B 27/18; B32B 27/32; B32B 27/34;
H01M 50/105; H01M 50/126; H01M 50/131;
Y02E 60/10**

(86) International application number:
**PCT/KR2024/017516**

(87) International publication number:
**WO 2025/121698 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 KR 20230176099
06.11.2024 KR 20240156612**

(71) Applicant: **LG Energy Solution, Ltd.
Seoul 07335 (KR)**

(72) Inventors:
• **HWANG, Soo Ji
Daejeon 34122 (KR)**

• **YU, Hyung Kyun
Daejeon 34122 (KR)**
• **KANG, Min Hyeong
Daejeon 34122 (KR)**
• **SONG, Dae Woong
Daejeon 34122 (KR)**
• **SHIN, Ji Hyun
Daejeon 34122 (KR)**
• **KIM, Gi Woung
Daejeon 34122 (KR)**
• **LEE, Wan Soo
Daejeon 34122 (KR)**

(74) Representative: **Plasseraud IP
104 Rue de Richelieu
CS92104
75080 Paris Cedex 02 (FR)**

(54) **POUCH FILM LAMINATE, POUCH-TYPE BATTERY CASE, AND POUCH-TYPE SECONDARY BATTERY**

(57) The present invention relates to a pouch film laminate in which a base material layer; a gas barrier layer; and a sealant layer are sequentially laminated, wherein the sealant layer includes a first sealant layer including a polypropylene random copolymer and a second sealant layer including crosslinked polypropylene, and a degree of crosslinking of the second sealant layer is in a range of 52% to 80%.

[FIG 1]

**Description**

## TECHNICAL FIELD

Cross-reference to Related Applications

This application claims priority from Korean Patent Application Nos. 10-2023-0176099, filed on December 6, 2023, and 10-2024-0156612, filed on November 6, 2024, the disclosures of which are incorporated by reference herein.

Technical Field

The present invention relates to a pouch film laminate, a pouch type battery case, and a pouch type secondary battery, and more particularly, to a pouch film laminate having excellent insulation properties while reducing tact time required for sealing the pouch film laminate, a pouch type battery case prepared by forming the same, and a pouch type secondary battery.

## BACKGROUND ART

In general, types of secondary batteries include a nickel cadmium battery, a nickel hydride battery, a lithium ion battery, and a lithium ion polymer battery. These secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup which store surplus generated power or renewable energy.

To prepare these secondary batteries, first, electrode active material slurries are applied onto a positive electrode collector and a negative electrode collector to prepare a positive electrode and a negative electrode, respectively, and the positive electrode and the negative electrode are stacked on both sides of a separator to form an electrode assembly having a predetermined shape. Then, the electrode assembly is put in a battery case, and the battery case is sealed after an electrolyte is injected.

The secondary batteries are classified into a pouch type, a can type, and the like, according to a material of a case for accommodating the electrode assembly. The pouch type accommodates the electrode assembly in a pouch formed of a flexible polymer material. The can type accommodates the electrode assembly in a case formed of a material such as metal or plastic.

The pouch, which is a case of the pouch type secondary battery, is prepared by press working of a flexible pouch film laminate to form a cup portion. Once the cup portion is formed, a secondary battery may be prepared by accommodating the electrode assembly in an inner accommodation space of the cup portion and sealing a sealing portion.

In general, the pouch film laminate is composed of a plurality of layers in which a polymer film, such as polyethylene terephthalate, is laminated on one surface of a metal gas barrier layer and a sealant layer is laminated on the other surface thereof.

Recently, demand for a pouch with excellent formability is increasing as capacity of the pouch type secondary battery is increased. In a case in which the gas barrier layer is formed thick to prepare a pouch with good formability, there is a problem in that the sealant layer does not easily melt when sealing the pouch type battery case. Conventionally, a method of increasing sealing temperature and/or sealing time was used as a method of applying more heat during the sealing of the pouch type battery case in order to solve this problem.

However, in a case in which the sealing time is increased to completely seal the pouch type battery case by sufficiently melting the sealant layer during the sealing, since time required to prepare the secondary battery is consequently increased, there is a problem in that productivity of the secondary battery is decreased. Also, the sealing time may be reduced when the sealing temperature is increased, but defects in appearance of the pouch may occur as a base material layer is deformed by melting.

In a case in which excessive heat is applied to the sealant layer during the sealing of the pouch type battery case, there is a problem in that insulation resistance of a pouch film is decreased due to excessive deformation of the sealant layer. In this case, since insulation properties of the pouch type battery case may deteriorate, the secondary battery may cause low voltage because it may not maintain a steady-state voltage, may have a risk of explosion or fire due to a short circuit in the battery, and may cause damage to the user's body.

Thus, there is a need to develop a pouch film laminate which may reduce sealing time without increasing sealing temperature when sealing a pouch type battery case and may secure insulation properties of the pouch type battery case.

## DISCLOSURE OF THE INVENTION

## TECHNICAL PROBLEM

An aspect of the present invention provides a pouch film laminate, which may improve both sealing quality and processability by reducing sealing time while preventing deformation of a sealing portion during a process of sealing a pouch type battery case which has been prepared from the pouch film laminate and may sufficiently secure insulation properties of the pouch type battery case, the pouch type battery case, and a pouch type secondary battery.

## TECHNICAL SOLUTION

[1] The present invention provides a pouch film laminate in which a base material layer; a gas barrier layer; and a sealant layer are sequentially laminated, wherein the sealant layer includes a first sealant layer including a polypropylene random copolymer and a second sealant layer including crosslinked polypropylene, and a degree of crosslinking of the crosslinked polypropylene is in a range of 52% to 80%.

[2] The present invention provides the pouch film laminate of [1] above, wherein the first sealant layer includes at least one selected from the group consisting of an ethylene-propylene random copolymer and a butene-propylene random copolymer.

[3] The present invention provides the pouch film laminate of [1] or [2] above, wherein an ethylene monomer of the polypropylene random copolymer is included in an amount of 5 wt% to 50 wt% based on a total weight of the first sealant layer.

[4] The present invention provides the pouch film laminate of at least one of [1] to [3] above, wherein the second sealant layer includes crosslinked homopolypropylene.

[5] The present invention provides the pouch film laminate of at least one of [1] to [4] above, wherein a ratio (A/B) of a thickness (A) of the first sealant layer to a thickness (B) of the second sealant layer is in a range of 0.6 to 1.5.

[6] The present invention provides the pouch film laminate of at least one of [1] to [5] above, wherein the sealant layer has a thickness of 30 $\mu$m to 130 $\mu$m.

[7] The present invention provides the pouch film laminate of at least one of [1] to [6] above, wherein, when the pouch film laminate is sealed at 200°C and 0.1 MPa for 3 seconds, insulation resistance of the pouch film laminate is 1,000 M$\Omega$ or more.

[8] The present invention provides the pouch film laminate of at least one of [1] to [7] above, wherein the sealant layer has a melting temperature of 120°C to 150°C.

[9] The present invention provides the pouch film laminate of at least one of [1] to [8] above, wherein a ratio ($D_S/D_A$) of a total thickness ($D_S$) of the two pouch film laminates when sealing the two pouch film laminates at 200°C and 0.1 MPa for 3 seconds to a total thickness ($D_A$) of the two pouch film laminates before the sealing is in a range of 0.2 to 0.6.

[10] The present invention provides the pouch film laminate of at least one of [1] to [9] above, wherein the sealant layer may further include a third sealant layer as an outermost layer, wherein the third sealant layer includes a polypropylene random copolymer.

[11] The present invention provides the pouch film laminate of at least one of [1] to [10] above, wherein the sealant layer is one in which the first sealant layer, the second sealant layer, and the third sealant layer are sequentially laminated.

[12] The present invention provides a pouch type battery case which is prepared by forming the pouch film laminate of any one of [1] to [11] above.

[13] The present invention provides a pouch type secondary battery including: the pouch type battery case of [12] above which is prepared by forming the pouch film laminate, and an electrode assembly accommodated in the pouch type battery case.

## ADVANTAGEOUS EFFECTS

According to the present invention, since a sealant layer is composed of a first sealant layer including a polypropylene random copolymer and a second sealant layer including crosslinked polypropylene and a degree of crosslinking of the second sealant layer is adjusted to a specific range, melting of a base material layer does not occur during a process of sealing a pouch type battery case, and thus, appearance defects may be improved by preventing deformation of a sealing portion while sealing time may be reduced. As a result, sealing quality, processability, and productivity of the pouch type battery case prepared from a pouch film laminate of the present invention may be secured, and durability and life characteristics of a pouch type secondary battery may be improved.

Also, since insulation resistance of the pouch type battery case may be maintained above a certain level even if excessive heat is applied to the sealant layer during the process of sealing the pouch type battery case, insulation properties of the pouch type battery case may be sufficiently secured. Accordingly, since the secondary battery may be operated at a normal voltage, battery performance is not degraded and stability may be improved by preventing a short circuit in the battery.

## BRIEF DESCRIPTION OF THE DRAWINGS

FIG. 1 is a cross-sectional view illustrating a structure of a pouch film laminate according to an embodiment of the present invention.
FIG. 2 is a cross-sectional view illustrating a structure of a pouch film laminate according to another embodiment of the present invention.
FIG. 3 is an exploded assembly view of a pouch type secondary battery according to the present invention.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing exemplary embodiments only and is not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In this specification, a "degree of crosslinking" denotes a ratio of chemical bonds formed between polypropylene chains. The "degree of crosslinking" of crosslinked polypropylene may be measured by a method of measuring a degree of crosslinking of ASTM D2765, and specifically, after a certain amount of sample is ground to be prepared in a powder form and is put into a Timble Filter and all uncrosslinked components are subsequently dissolved by circulating the sample at 110°C for 12 hours using xylene contained in a reactor connected to a cooler, the degree of crosslinking of the crosslinked polyolefin-based resin may be obtained by measuring a weight of the crosslinked and undissolved sample relative to a weight of the sample initially added, and then being calculated by the following equation.

Degree of crosslinking (%) = (weight of the sample undissolved in solvent / weight of the sample initially added) × 100    [Equation 1]

A pouch film laminate, a pouch type battery case, and a lithium secondary battery according to the present invention include at least one of configurations disclosed below, and may include any combination between technically possible configurations among the configurations below.

As a result of a significant amount of research conducted into developing a pouch type film laminate which may reduce sealing time while preventing deformation of a sealing portion during sealing and may secure insulation resistance of a pouch type battery case to a certain level or more, the present inventors have found that, in a case in which a sealant layer is composed of a first sealant layer including a polypropylene random copolymer and a second sealant layer including crosslinked polypropylene and a degree of crosslinking of the second sealant layer is in a range of 52% to 80%, since the sealing time may be reduced without increasing sealing temperature when sealing the pouch type battery case prepared by using the pouch film laminate, sealing quality, productivity, and processability may be improved at the same time and battery performance and stability may also be improved due to sufficient insulation properties of the pouch type battery case, thereby leading to the completion of the present invention.

Hereinafter, the present invention will be described in more detail.

## Pouch Film Laminate

A pouch film laminate according to the present invention is a pouch film laminate in which a base material layer; a gas barrier layer; and a sealant layer are sequentially laminated, wherein the sealant layer includes a first sealant layer including a polypropylene random copolymer and a second sealant layer including crosslinked polypropylene, and a degree of crosslinking of the second sealant layer is in a range of 52% to 80%.

When the pouch film laminate is sealed at 200°C and 0.1 MPa for 3 seconds, insulation resistance of the pouch film laminate may be 1000 MΩ or more. Specifically, the insulation resistance may be 1000 MΩ or more, 1100 MΩ or more, 1200 MΩ or more, 1300 MΩ or more, 1400 MΩ or more, 1500 MΩ or more, 1600 MΩ or more, or 1700 MΩ or more. In a case in which the above range of the insulation resistance is satisfied, since a pouch type battery case prepared may have sufficient insulation properties, a secondary battery may be operated at a normal voltage, a short circuit in the battery may be prevented, stability may be improved by reducing a risk of explosion or ignition, and a risk of damage to the user's body may be reduced.

The pouch film laminate according to the present invention may have a total thickness of 120 $\mu$m to 250 $\mu$m, preferably 140 $\mu$m to 230 $\mu$m, and more preferably 150 $\mu$m to 215 $\mu$m. When the thickness of the pouch film laminate satisfies the above range, a forming depth may be increased while minimizing a reduction of sealing durability and a decrease in battery accommodation space due to an increase in the thickness of the pouch laminate.

In this case, a ratio ($D_S/D_A$) of a total thickness ($D_S$) of the two pouch film laminates when sealing the two pouch film laminates at 200°C and 0.1 MPa for 3 seconds to a total thickness ($D_A$) of the two pouch film laminates before the sealing may be in a range of 0.2 to 0.6. Specifically, the $D_S/D_A$ may be 0.2 or more, 0.25 or more, 0.3 or more, 0.35 or more, 0.4 or more, or 0.4 or more, and may be 0.6 or less, 0.55 or less, 0.5 or less, or 0.45 or less. In a case in which the above range is satisfied, sealability and insulation properties of the sealed pouch type battery case are excellent.

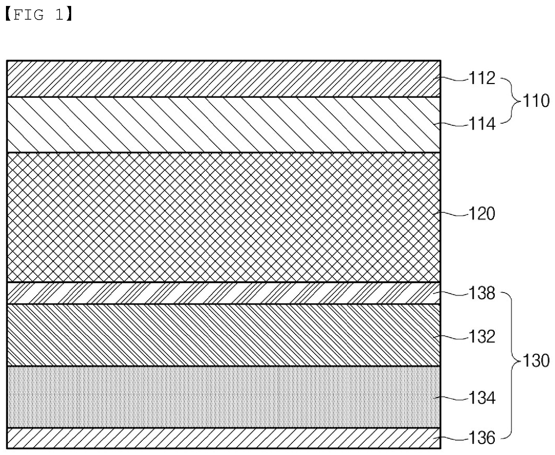

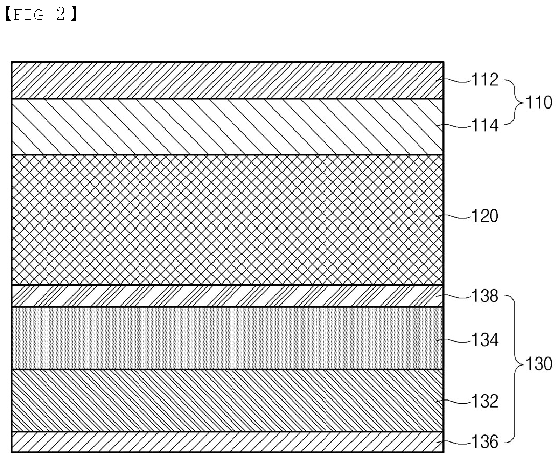

FIGS. 1 and 2 are cross-sectional views illustrating a structure of a pouch film laminate according to an embodiment of the present invention.

Referring to FIGS. 1 and 2, a pouch film laminate 100 according to an embodiment of the present invention includes a base material layer 110, a gas barrier layer 120, and a sealant layer 130, and the base material layer 110, the gas barrier layer 120, and the sealant layer 130 may be sequentially laminated in the pouch film laminate 100.

The pouch film laminate according to the present invention may be prepared by a method of preparing a pouch film laminate which is known in the art. For example, the pouch film laminate of the present invention may be prepared by a method of attaching the base material layer 110 to an upper surface of the gas barrier layer 120 with an adhesive, and forming the sealant layer 130 on a lower surface of the gas barrier layer 120 using coextrusion or an adhesive layer, and may be prepared by a method such as dry lamination or sandwich lamination. However, the method of preparing a pouch film laminate is not limited thereto.

Hereinafter, each layer included in the pouch film laminate will be described in detail with reference to FIGS. 1 and 2.

**(1) Base Material Layer**

The base material layer 110 is formed as an outermost layer of the pouch film laminate 100 to protect a secondary battery from friction and collision with the outside. The base material layer 110 is formed of a polymer such that it may electrically insulate an electrode assembly from the outside.

The base material layer 110 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon. Among them, the base material layer 110 may preferably be formed of polyethylene terephthalate (PET), Nylon, or a combination thereof which has wear resistance and heat resistance.

The base material layer 110 may have a thickness of 5 $\mu$m to 100 $\mu$m, particularly 7 $\mu$m to 70 $\mu$m, and more particularly 10 $\mu$m to 60 $\mu$m. In a case in which the thickness of the base material layer 110 satisfies the above range, since external insulation properties are excellent and an entire pouch is not thick, energy density to volume of the secondary battery may be excellent.

The base material layer 110 may have a single layer structure formed of any one material. Alternatively, the base material layer 110 may have a composite layer structure which is formed by layering two or more materials, respectively. An adhesive layer may be additionally disposed between the respective layers in the composite layer structure.

Specifically, the base material layer 110 according to the present invention may include a first base material layer 112 and a second base material layer 114. In this case, the first base material layer 112 may be a layer disposed as the outermost layer of the pouch film laminate, and the second base material layer 114 may be a layer disposed between the first base material layer 112 and the gas barrier layer 120. The first base material layer 112 and the second base material layer 114 may be formed of materials with different materials and/or physical properties, respectively. An interface may exist between the first base material layer 112 and the second base material layer 114. This means that the first base material layer 112 and the second base material layer 114 are different layers from each other and may be formed separately.

Hereinafter, each of the above-described first base material layer 112 and second base material layer 114 will be described in more detail.

### 1) First Base Material Layer

The first base material layer 112 may play a role in preventing moisture penetration from the outside of the pouch. The first base material layer 112 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon. Preferably, the first base material layer 112 may include a polyester-based film having wear resistance and heat resistance. For example, the first base material layer 112 may include at least one selected from the group consisting of polyethylene terephthalate, polybutylene terephthalate, and polyethylene naphthalate, but is not limited thereto. The first base material layer 112 may have a thickness of 10 $\mu$m to 50 $\mu$m, particularly 10 $\mu$m to 40 $\mu$m, and more particularly 12 $\mu$m to 25 $\mu$m. In a case in which the thickness of the first base material layer 112 satisfies the above numerical range, moisture penetration into the inside of the pouch film laminate may be effectively suppressed while insulation properties and formability of the pouch are ensured. Also, since the entire pouch is not thick, the energy density to volume of the secondary battery is excellent.

### 2) Second Base Material Layer

The second base material layer 114 may play a role in improving the formability of the pouch. The second base material layer 114 may include a polyamide-based film. For example, the second base material layer 114 may include at least one selected from the group consisting of Nylon 6, Nylon 6,6, Nylon MXD6(polyxylylene adipamide), Nylon 4, Nylon 4,6, and Nylon 4,10, but is not limited thereto. Preferably, the second base material layer 114 may include Nylon 6, and in this case, there is an advantage of improving the formability of the pouch due to excellent elongation properties of the Nylon 6. The second base material layer 114 may have a thickness of 10 $\mu$m to 50 $\mu$m, particularly 10 $\mu$m to 40 $\mu$m, and more particularly 15 $\mu$m to 35 $\mu$m. In a case in which the thickness of the second base material layer 114 satisfies the above numerical range, a decrease in the energy density to volume of the secondary battery due to an excessive increase in thickness of the pouch film laminate may be prevented while the formability of the pouch is ensured.

The second base material layer 114 may include metal oxide particles. The metal oxide particles may remove moisture in the second base material layer 114 by being hydroxylated through a reaction with the moisture introduced into the second base material layer 114. The metal oxide particles may include at least one selected from the group consisting of CaO, MnO, SrO, MgO, and ZnO. Preferably, the metal oxide particles may include at least one of CaO and MgO which are advantageous for hydroxylation with water.

The second base material layer 114 may further include an additive. Physical properties of the second base material layer 114 may be changed by including the additive in the second base material layer 114. For example, as an additive to adjust tensile strength of the second base material layer 114, at least one of carbon fibers, glass fibers, and aramid fibers may be added.

### (2) Gas Barrier Layer

The gas barrier layer 120 is laminated between the base material layer 110 and the sealant layer 130 to secure mechanical strength of the pouch, block incoming and outgoing of gas or moisture from the outside of the secondary battery, and prevent leakage of an electrolyte from the inside of the pouch type battery case.

The gas barrier layer 120 may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 120 may be formed of an aluminum alloy thin film. In a case in which the gas barrier layer 120 is formed by using the aluminum alloy thin film, the gas barrier layer 120 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

In another example, the gas barrier layer 120 may be formed of a stainless steel thin film. Specifically, the gas barrier layer 120 may be prepared by forming and/or processing the stainless steel thin film. Since the gas barrier layer 120 formed of stainless steel has relatively low thermal conductivity, it is effective in preventing or delaying heat diffusion to other cells during thermal runaway, and, since it has relatively high toughness, it may suppress generation of cracks in the pouch during use of a pouch type battery. An element other than iron (Fe), for example, at least one selected from the group consisting of copper (Cu), chromium (Cr), manganese (Mn), nickel (Ni), magnesium (Mg), silicon (Si), and zinc (Zn) may be included in the stainless steel.

The gas barrier layer 120 may have a thickness of 20 $\mu$m to 100 $\mu$m, preferably 30 $\mu$m to 90 $\mu$m, and more

preferably 35 μm to 85 μm. In a case in which the above range is satisfied, since the present invention does not cause a problem of the deformation of the base material layer even if the sealing temperature is increased so that heat may be transferred to the sealant layer, gas barrier performance and formability may be improved when forming a cup portion by using the gas barrier layer thicker than a conventional gas barrier layer.

**(3) Sealant Layer**

The sealant layer 130 is for completely sealing the inside of the pouch type battery case by being thermally bonded to each other at a sealing portion when the pouch type battery case accommodating the electrode assembly inside is sealed.

The sealant layer 130 may have a thickness of 50 μm to 140 μm, particularly 60 μm to 130 μm, and more particularly 70 μm to 120 μm. In a case in which the thickness of the sealant layer satisfies the above range, there is an effect of securing formability of the pouch film laminate while securing sealing strength of the sealing portion.

The sealant layer 130 according to the present invention may have a composite layer structure which is formed by layering two or more materials, respectively. For example, the sealant layer 130 may have a multilayer structure. An adhesive layer and/or a skin layer may be disposed between the respective layers of the sealant layer 130 having the composite layer structure. Since the adhesive layer and/or skin layer have thermal adhesiveness, the adhesive layer and/or skin layer may play a role in helping adhesion between the respective layers of the sealant layer 130. For example, the adhesive layer and/or skin layer may include a polypropylene-based resin, but are not limited thereto. Also, the adhesive layer and/or skin layer may be disposed between the sealant layer 130 and the gas barrier layer 120.

Specifically, the sealant layer 130 according to the present invention includes a first sealant layer 132 and a second sealant layer 134. As another example, the sealant layer 130 may further include a third sealant layer 136 and/or a fourth sealant layer 138 in addition to the first sealant layer 132 and the second sealant layer 134. The respectively layers of the sealant layer 130 including the first sealant layer 132 and the second sealant layer 134 may be formed of materials with different materials and/or physical properties, respectively. An interface may exist between the respectively layers included in the sealant layer 130. This means that the respective layers are different layers from each other and may be formed separately.

Specifically, in the pouch film laminate according to the present invention, the sealant layer includes the first sealant layer 132 including a polypropylene random copolymer and the second sealant layer 134 including crosslinked polypropylene.

When the sealant layer of a first case and the sealant layer of a second case are in contact with each other in the sealing portion and are sealed by thermal bonding, the sealant layer must completely seal the pouch type battery case so that an electrolyte solution inside the pouch type battery case does not leak to the outside of the pouch type battery case and the secondary battery must be protected from external impact or moisture penetration. Also, since the sealant layer is in direct contact with the electrode assembly and/or the electrolyte inside the pouch type battery case, it must have insulation properties and corrosion resistance. For this purpose, the sealant layer must have excellent thermal bonding strength and insulation resistance so that the pouch type battery case has sufficient sealability, insulation properties, and corrosion resistance.

In order for the sealant layer to have excellent thermal bonding strength, a sufficient amount of heat must be applied during sealing so that the sealant layers may be sufficiently melted to be closely attached to each other. In this case, as a method to apply more heat when sealing the pouch type battery case, the sealing temperature and/or sealing time may be increased.

However, in a case in which the sealing temperature is increased, deformation of the base material layer may occur as moisture contained in the base material layer evaporates, and, accordingly, since defects in appearance of the pouch type battery case may occur, quality of the battery may be degraded.

Thus, conventionally, a polypropylene homopolymer or a polypropylene block copolymer was generally included in a sealant layer, and sealing time was increased to improve sealing strength of a pouch type battery case. However, in this case, since the time required for sealing is increased, time required for a preparation process of a secondary battery is consequently increased, and accordingly, there is a problem of reduction in processability and productivity of the secondary battery.

Thus, since the pouch film laminate according to the present invention includes a polypropylene random copolymer, rather than a polypropylene homopolymer or a polypropylene block copolymer, in the first sealant layer, the time required for sealing is reduced while the sealing strength of the pouch type secondary battery is sufficiently secured.

However, in a case in which only the polypropylene random copolymer is included in the sealant layer, arrangement of the polypropylene random copolymer may change as the sealant layer melts due to the application of excessive heat to the sealing portion during a sealing process of the pouch type secondary battery, and accordingly, there may be a problem in that the thickness of the sealant layer may be significantly decreased. If the thickness of the sealant layer is decreased, a problem of corrosion may be intensified as the sealant layer is in contact with the electrolyte so that the electrolyte penetrates into the sealant layer. Also, there may be a risk of a short circuit in the battery, explosion, or ignition as insulation resistance of the sealing portion decreases below a certain level to reduce the insulation properties of the pouch type battery case, and a serious damage to the user's body may occur.

Thus, since the pouch film laminate according to the present invention includes the second sealant layer including crosslinked polypropylene together with the first sealant layer including the polypropylene random copolymer, a phenomenon, in which polymer components are deformed and the thickness and insulation resistance of the sealant layer are excessively reduced, may be prevented even if the sealing portion is compressed while a large amount of heat is applied to the sealing portion during the sealing process of the pouch type secondary battery, and thus, the insulation properties and corrosion resistance of the prepared pouch type battery case may be sufficiently secured.

The first sealant layer 132 and the second sealant layer 134 may be sequentially laminated, or the second sealant layer 134 and the first sealant layer 132 may be sequentially laminated. In a case in which the third sealant layer 136 is additionally included, the third sealant layer 136 may be located at an outermost portion of the sealant layer, and the first sealant layer 132, the second sealant layer 134, and the third sealant layer 136 may be sequentially laminated, or the second sealant layer 134, the first sealant layer 132, and the third sealant layer 136 may be sequentially laminated.

A ratio (A/B) of a thickness (A) of the first sealant layer 132 to a thickness (B) of the second sealant layer 134 may be in a range of 0.6 to 1.5. Specifically, the ratio (A/B) of the thickness (A) of the first sealant layer 132 to the thickness (B) of the second sealant layer 134 may be 0.6 or more, 0.7 or more, 0.8 or more, or 0.9 or more, and may be 1.5 or less, 1.4 or less, 1.3 or less, 1.2 or less, or 1.1 or less. In a case in which the above range is satisfied, since the prepared pouch type battery case has excellent sealability, corrosion resistance, and insulation properties and the sealing time is reduced at the same time, the productivity of the secondary battery may be excellent.

Hereinafter, each layer of the sealant layer will be described in detail.

**1) First Sealant Layer**

The first sealant layer 132 includes a polypropylene random copolymer. In this case, the polypropylene random copolymer, as a copolymer component, means a copolymer containing propylene and other copolymer components excluding the propylene. Specifically, the first sealant layer 132 may include at least one selected from the group consisting of an ethylene-propylene random copolymer and a butene-propylene random copolymer, and may preferably include an ethylene-propylene random copolymer. In a case in which the polypropylene random copolymer is included in the first sealant layer, since a melt flow rate (MFR) is high and a melting point is low, a sealing thickness to be achieved may be quickly achieved when the same amount of heat is applied. Accordingly, since the sealing time may be reduced in comparison to a case where a polypropylene homopolymer is included even if the sealing temperature is not increased and process time of the secondary battery may be reduced, the productivity and processability may be improved and simultaneously, since the first sealant layer has high thermal bonding strength, the pouch type battery case may have excellent sealability.

An ethylene monomer of the polypropylene random copolymer may be included in an amount of 5 wt% to 50 wt% based on a total weight of the first sealant layer 132. Specifically, the ethylene monomer of the polypropylene random copolymer may be included in an amount of 5 wt% or more, 7 wt% or more, 10 wt% or more, 12 wt% or more, 15 wt% or more, or 17 wt% or more based on the total weight of the first sealant layer 132, and may be included in an amount of 50 wt% or less, 45 wt% or less, 40 wt% or less, 35 wt% or less, 30 wt% or less, 25 wt% or less, or 20 wt% or less. For example, the ethylene monomer of the polypropylene random copolymer may be included in an amount of 5 wt% to 50 wt%, preferably 10 wt% to 30 wt%, more preferably 12 wt% to 25 wt%, and even more preferably 15 wt% to 20 wt% based on the total weight of the first sealant layer 132. In a case in which the above range is satisfied, since the sealant layer may be sealed by being quickly melted during the sealing process, the sealing time may be reduced while having excellent thermal bonding strength.

The first sealant layer 132 may have a melting temperature of 120°C to 150°C. Specifically, the melting temperature of the first sealant layer 132 may be 120°C or higher, 125°C or higher, 130°C or higher, or 135°C or higher, and may be 150°C or less, 145°C or less, or 140°C or less. In a case in which the melting temperature is satisfied, the sealant layer may be sufficiently melted within a sealing process temperature to achieve excellent sealability.

The first sealant layer 132 may have a thickness of 10 μm to 90 μm, particularly 10 μm to 60 μm, and more particularly 10 μm to 40 μm. In a case in which the thickness of the first sealant layer 132 satisfies the above range, since sealing durability and insulation properties of the pouch type battery case prepared from the pouch film laminate are excellent, excellent sealing strength may be achieved. Also, extrusion with a uniform thickness may be possible in an extrusion process of the pouch film laminate, and a problem of decrease in energy density of the prepared pouch type secondary battery may be prevented.

According to an embodiment of the present invention, the first sealant layer 132 may be a layer that is in direct contact with the gas barrier layer 120 or may be a layer that is not in direct contact with the gas barrier layer 120. In a case in which the first sealant layer is in direct contact with the gas barrier layer 120, the first sealant layer 132 may directly adhere to the gas barrier layer 120 if the pouch film laminate 100 is coextruded. In another example, an adhesive layer and/or a skin layer may be disposed between the first sealant layer 132 and the gas barrier layer 120 to improve adhesion between the first sealant layer 132 and the gas barrier layer 120. In a case in which the first sealant layer is not in direct contact with the gas barrier layer 120, the second sealant layer 134 may be disposed between the first sealant layer 132 and the gas barrier layer 120.

**2) Second Sealant Layer**

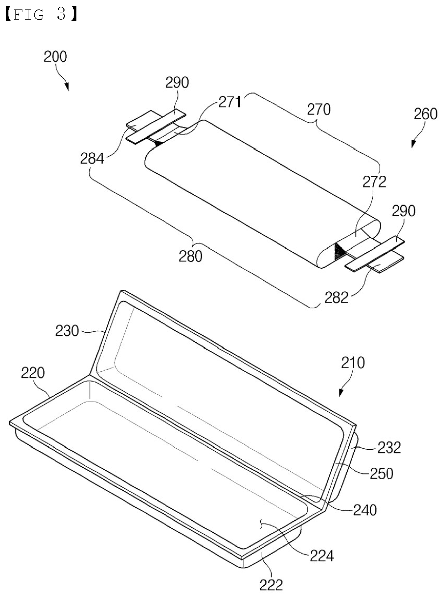

The second sealant layer 134 may be formed of a material having insulation properties, corrosion resistance, and sealability. Specifically, since the second sealant layer 134 is in direct contact with an electrode assembly (260 in FIG. 3) and/or the electrolyte inside an accommodation space (224 in FIG. 3), it may be formed of a material having insulation properties and corrosion resistance. Also, since the second sealant layer 134 completely seals the inside of the battery case to block material movement between the inside/the outside, it may be formed of a material having high sealability.

The second sealant layer 134 may include crosslinked polypropylene. The crosslinked polypropylene may have a structure in which polypropylene linear chains are linked to each other at multiple positions by covalent bonds, and the crosslinked polypropylene may include partially crosslinked polypropylene. Specifically, the second sealant layer may include crosslinked homopolypropylene.

In the present invention, since the crosslinked polypropylene is included in the second sealant layer 134, a distance between the polypropylene chains may be maintained within a certain range even when heat and pressure are applied due to the covalent bond between the polypropylene chains of the crosslinked polypropylene even if a large amount of heat is applied to the sealant layer when sealing the pouch film laminate. Accordingly, the sealant layer may be maintained at a certain thickness or more even if over-sealing occurs during the sealing process of the pouch film laminate, and accordingly, corrosion resistance may be exhibited even if the sealant layer is in contact with the electrolyte solution accommodated in the battery case, and since the insulation resistance of the sealed pouch type battery case may be a predetermined level or more, insulation properties and corrosion resistance may be secured. Thus, there is an advantage in that stability and battery performance of the prepared pouch type secondary battery may be secured.

A degree of crosslinking of the crosslinked polypropylene may be in a range of 52% to 80%. Specifically, the degree of crosslinking of the crosslinked polypropylene may be 52% or more, 55% or more, 57% or more, or 60% or more, and may be 80% or less, 75% or less, 70% or less, 65% or less, or 60% or less. In a case in which the degree of crosslinking is less than 52%, since the distance between the polypropylene chains may not be maintained when a large amount of heat is applied to the sealant layer due to low crosslinking ability of the crosslinked polypropylene, the thickness of the sealant layer may be significantly decreased after sealing, and accordingly, there may be a problem in that the insulation properties of the pouch type battery case are deteriorated. In a case in which the degree of crosslinking is greater than 80%, the thickness of the sealant layer does not decrease significantly when sealing the pouch type battery case, but delamination may occur at interfaces of the second sealant layer, and, accordingly, problems may occur in the insulation properties, corrosion resistance, and sealability of the pouch type battery case. Thus, in a case in which the degree of crosslinking satisfies the range of 52% to 80%, the prepared pouch type battery case may have excellent insulation properties while preventing delamination between interfaces of the sealant layers.

The degree of crosslinking of the crosslinked polypropylene may be adjusted to an appropriate range by adjusting an amount of a cross-linking agent added. Specifically, the cross-linking agent may be a tin-based compound, may specifically be an organic tin-based compound, and may more specifically be an octyltin-based compound and/or a butyltin-based compound.

The second sealant layer 134 may have a melting temperature of 120°C to 150°C. Specifically, the melting temperature of the second sealant layer 134 may be 120°C or higher, 125°C or higher, 130°C or higher, or 135°C or higher, and may be 150°C or less, 145°C or less, or 140°C or less. In a case in which the melting temperature is satisfied, the sealant layer may be sufficiently melted within the sealing process temperature to achieve excellent sealability.

The second sealant layer 134 may have a thickness of 10 $\mu$m to 90 $\mu$m, particularly 10 $\mu$m to 60 $\mu$m, and more particularly 10 $\mu$m to 40 $\mu$m. In a case in which the thickness of the second sealant layer 134 satisfies the above range, since the sealing durability and insulation properties of the pouch type battery case prepared from the pouch film laminate are excellent, excellent sealing strength may be achieved. Also, extrusion with a uniform thickness may be possible in the extrusion process of the pouch film laminate, and a problem of decrease in the energy density of the prepared pouch type secondary battery may be prevented.

According to an embodiment of the present invention, the second sealant layer 134 may be a layer that is in direct contact with the gas barrier layer 120 or may be a layer that is not in direct contact with the gas barrier layer 120. In a case in which the second sealant layer is in direct contact with the gas barrier layer, the second sealant layer 134 may directly adhere to the gas barrier layer 120 if the pouch film laminate 100 is coextruded. In another example, an adhesive layer and/or a skin layer may be disposed between the second sealant layer 134 and the gas barrier layer 120 to improve adhesion between the second sealant layer 134 and the gas barrier layer 120. In a case in which the second sealant layer is not in direct contact with the gas barrier layer 120, the first sealant layer 132 may be disposed between the second sealant layer 134 and the gas barrier layer 120.

The second sealant layer 134 may be disposed so as to be in direct contact with the first sealant layer 132, or may be disposed so as not to be in direct contact with the first sealant layer 132. In a case in which the second sealant layer 134 and the first sealant layer 132 are not in direct contact, the pouch film laminate may further include at least one layer disposed between the first sealant layer 132 and the second sealant layer 134. For example, an intermediate layer (not shown) may be disposed between the first sealant layer 132 and the second sealant layer 134 to improve insulation properties of the pouch film laminate. The intermediate layer may include at least one of polypropylene and homopolypropylene. A thickness of the intermediate layer may be in a range of 80 μm or less, particularly 10 μm to 60 μm, and more particularly 10 μm to 30 μm. In a case in which the thickness of the intermediate layer satisfies the above numerical range, excellent sealing strength may be secured while coextrusion formability of the sealant layer is improved.

**3) Third Sealant Layer**

The sealant layer may further include the third sealant layer 136 as an outermost layer. In this case, the third sealant layer 136 may be a material having high thermal bonding strength as a layer in which the sealant layers are in contact with each other when sealing the pouch film laminate.

The third sealant layer may include a polypropylene random copolymer. Specifically, the third sealant layer may include at least one selected from the group consisting of an ethylene-propylene random copolymer and a butene-propylene random copolymer, and may preferably include an ethylene-propylene random copolymer. In a case in which the polypropylene random copolymer is included in the third sealant layer, since the melt flow rate (MFR) is high and the melting point is low, the sealing thickness to be achieved may be quickly achieved when the same amount of heat is applied. Accordingly, since the sealing time may be reduced in comparison to the case where the polypropylene homopolymer is included even if the sealing temperature is not increased and the process time of the secondary battery may be reduced, the productivity and processability may be improved and simultaneously, since the third sealant layer has high thermal bonding strength, the pouch type battery case may have excellent sealability.

The third sealant layer may have a thickness of 5 μm to 50 μm, particularly 5 μm to 30 μm, and more particularly 7 μm to 20 μm. In a case in which the thickness of the third sealant layer satisfies the above range, since the sealing durability and insulation properties of the pouch type battery case prepared from the pouch film laminate are excellent, excellent sealing strength may be achieved. Also, extrusion with a uniform thickness may be possible in the extrusion process of the pouch film laminate, and the problem of decrease in the energy density of the prepared pouch type secondary battery may be prevented.

The third sealant layer may be disposed so as to be in direct contact with the second sealant layer, or may be disposed so as not to be in direct contact with the second sealant layer. In a case in which the third sealant layer and the second sealant layer 134 are not in direct contact, the pouch film laminate may further include at least one layer disposed between the second sealant layer 134 and the third sealant layer. For example, an intermediate layer (not shown) may be disposed between the second sealant layer 134 and the third sealant layer to improve the insulation properties of the pouch film laminate. The intermediate layer may include at least one of polypropylene and homopolypropylene. A thickness of the intermediate layer may be in a range of 80 μm or less, particularly 10 μm to 60 μm, and more particularly 10 μm to 30 μm. In a case in which the thickness of the intermediate layer satisfies the above numerical range, excellent sealing strength may be secured while the coextrusion formability of the sealant layer is improved.

**4) Fourth Sealant Layer**

The sealant layer may further include the fourth sealant layer 138 between the gas barrier layer and the first sealant layer. In this case, the fourth sealant layer 138 may be a material having high delamination strength as an interface between the gas barrier layer and the sealant layer.

The fourth sealant layer may include a polypropylene random copolymer. Specifically, the fourth sealant layer may include at least one selected from the group consisting of an ethylene-propylene random copolymer and a butene-propylene random copolymer, and may preferably include an ethylene-propylene random copolymer. In a case in which the polypropylene random copolymer is included in the fourth sealant layer, delamination strength at the interface between the gas barrier layer and the sealant layer may be improved.

The fourth sealant layer may have a thickness of 5 μm to 50 μm, particularly 5 μm to 30 μm, and more particularly 7 μm to 20 μm. In a case in which the thickness of the fourth sealant layer satisfies the above range, since the sealing durability and insulation properties of the pouch type battery case prepared from the pouch film laminate are excellent, excellent sealing strength may be achieved. Also, extrusion with a uniform thickness may be possible in the extrusion process of the pouch film laminate, and the problem of decrease in the energy density of the prepared pouch type secondary battery may be prevented.

The fourth sealant layer may be disposed so as to be in direct contact with the first sealant layer, or may be disposed so as not to be in direct contact with the first sealant layer. In a case in which the fourth sealant layer and the first sealant layer 132 are not in direct contact, the pouch film laminate may further include at least one layer disposed between the second sealant layer 134 and the third sealant layer. For example, an intermediate layer (not shown) may be disposed between the first sealant layer 132 and the fourth sealant layer 138 to improve the insulation properties of the pouch film laminate. The intermediate layer may include at least one of polypropylene and homopolypropylene. A thickness of the intermediate layer may be in a range of 80 $\mu$m or less, particularly 10 $\mu$m to 60 $\mu$m, and more particularly 10 $\mu$m to 30 $\mu$m. In a case in which the thickness of the intermediate layer satisfies the above numerical range, excellent sealing strength may be secured while the coextrusion formability of the sealant layer is improved.

### Pouch Type Battery Case

FIG. 3 is an exploded assembly view of a pouch type secondary battery 200 according to the present invention.
Referring to FIG. 3, a pouch type battery case 210 may be prepared by forming the above-described pouch film laminate of the present invention. The pouch type battery case 210 may accommodate an electrode assembly 260 inside. Since detailed configuration and physical properties of the pouch film laminate are the same as described above, a detailed description is omitted.
The pouch film laminate may be drawn and stretched by a punch or the like to prepare the pouch type battery case 210. As a result, the pouch type battery case 210 may include a cup portion 222 and an accommodation portion 224. The accommodation portion 224 is a place to accommodate the electrode assembly, wherein it may mean an accommodation space which is formed in a pocket shape inside the cup portion 222 as the cup portion 222 is formed.
According to an embodiment of the present invention, the pouch type battery case 210 may include a first case 220 and a second case 230 as illustrated in FIG. 3. The first case 220 includes the accommodation portion 224 capable of accommodating the electrode assembly 260, and the second case 230 may cover the accommodation portion 224 from the top so that the electrode assembly 260 is not separated to the outside of the battery case 210. The first case 220 and the second case 230 may be prepared by connecting one sides thereof to each other as illustrated in FIG. 3, but the present invention is not limited thereto and the first case 220 and the second case 230 may be prepared in various ways, for example, the first case 220 and the second case 230 are separated from each other and prepared separately.
According to another embodiment of the present invention, in a case in which the cup portion is formed on the pouch film laminate, the two symmetrical cup portions 222 and 232 may be drawn adjacent to each other on one pouch film laminate. In this case, as illustrated in FIG. 3, the cup portions 222 and 232 may be formed in the first case 220 and the second case 230, respectively. After the electrode assembly 260 is accommodated in the accommodation portion 224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200 may be improved, and the number of sealing processes may be reduced.
The pouch type battery case 210 may be sealed in a state in which it accommodates the electrode assembly 260 so that a portion of an electrode lead 280 to be described later, that is, a terminal portion, is exposed. Specifically, when the electrode lead 280 is connected to an electrode tab 270 of the electrode assembly 260 and an insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion 250 formed on edges of the first case 220 and the second case 230 may be sealed.
The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

### Pouch Type Secondary Battery

Next, a pouch type secondary battery according to the present invention will be described.
As illustrated in FIG. 3, the pouch type secondary battery 200 according to the present invention may include the pouch type battery case 210 prepared by forming the above-described pouch film laminate, and the electrode assembly 260 accommodated in the pouch type battery case 210. Specifically, the pouch type secondary battery 200 of the present invention may include the pouch type battery case 210, the electrode assembly 260, the electrode lead 280, the insulating portion 290, and an electrolyte (not shown).

Hereinafter, each configuration of the pouch type secondary battery of the present invention will be described in more detail with reference to FIG. 3.

### (1) Pouch Type Battery Case

Since each component of the pouch type battery case is the same as described above, a detailed description thereof is omitted.

### (2) Electrode Assembly

The electrode assembly 260 may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260. The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 3, the electrode tabs 270 may protrude in different directions of the electrode assembly 260, respectively, but are not limited thereto and may be formed to protrude in various directions, for example, the electrode tabs 270 protrude side by side from one side of the electrode assembly 260 in the same direction.

### (3) Electrode Lead

The electrode lead 280 may supply electricity to the outside of the secondary battery 200. The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250. Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 274 and extends in a protruding direction of the negative electrode tab 274. The other ends of both of the positive electrode lead 282 and the negative electrode lead 284 may protrude to the outside of the battery case 210. Accordingly, the electricity generated inside the electrode assembly 260 may be supplied to the outside. Also, since the positive electrode tab 272 and the negative electrode tab 274 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

### (4) Insulating Portion

The insulating portion 290 prevents flow of the electricity generated from the electrode assembly 260 to the battery case 210 through the electrode lead 280, and may maintain sealing of the battery case 210. For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

### (5) Electrolyte

The pouch type secondary battery 200 according to the present invention may further include an electrolyte (not shown) that is injected into the pouch type battery case 210. The electrolyte is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

### <u>Examples and Comparative Examples</u>

### Example 1: Preparation of Pouch Film Laminate

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film (fourth sealant layer), a 30 $\mu$m thick ethylene-propylene random copolymer film (first sealant layer), a 30 $\mu$m thick crosslinked homopolypropylene film (second sealant layer), and a 10 $\mu$m thick ethylene-propylene random copolymer film (third sealant layer) were sequentially laminated on the other surface of the aluminum thin film by a coextrusion method. In this case, an ethylene monomer was included in an amount of 15 wt% in the ethylene-propylene random copolymer film (first sealant layer), and a degree of crosslinking of crosslinked homopolypropylene in the crosslinked homopolypropylene film (second sealant layer) was 60%.

As a result, a pouch film laminate having a structure, in which the polyethylene terephthalate/second adhesive film/nylon film/first adhesive film/aluminum thin film/ethylene-propylene random copolymer film (fourth sealant layer) /ethylene-propylene random copolymer film (first sealant layer)/crosslinked homopolypropylene film (second sealant layer) /ethylene-propylene random copolymer film (third sealant layer) were sequentially laminated, was prepared.

### Example 2: Preparation of Pouch Film Laminate

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film (fourth sealant layer), a 20 $\mu$m thick ethylene-propylene random copolymer film (first sealant layer), a 40 $\mu$m thick crosslinked homopolypropylene film (second sealant layer), and a 10 $\mu$m thick ethylene-propylene random copolymer film (third sealant layer) were sequentially laminated on the other surface of the aluminum thin film by a coextrusion method. In this case, an ethylene monomer was included in an amount of 15 wt% in the ethylene-propylene random copolymer film (first sealant layer), and a degree of crosslinking of crosslinked homopolypropylene in the crosslinked homopolypropylene film (second sealant layer) was 60%.

As a result, a pouch film laminate having a structure, in which the polyethylene terephthalate/second adhesive film/nylon film/first adhesive film/aluminum thin film/ethylene-propylene random copolymer film (fourth sealant layer) /ethylene-propylene random copolymer film (first sealant layer)/crosslinked homopolypropylene film (second sealant layer) /ethylene-propylene random copolymer film (third sealant layer) were sequentially laminated, was prepared.

**Example 3: Preparation of Pouch Film Laminate**

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film (fourth sealant layer), a 40 $\mu$m thick ethylene-propylene random copolymer film (first sealant layer), a 20 $\mu$m thick crosslinked homopolypropylene film (second sealant layer), and a 10 $\mu$m thick ethylene-propylene random copolymer film (third sealant layer) were sequentially laminated on the other surface of the aluminum thin film by a coextrusion method. In this case, an ethylene monomer was included in an amount of 15 wt% in the ethylene-propylene random copolymer film (first sealant layer), and a degree of crosslinking of crosslinked homopolypropylene in the crosslinked homopolypropylene film (second sealant layer) was 60%.

As a result, a pouch film laminate having a structure, in which the polyethylene terephthalate/second adhesive film/nylon film/first adhesive film/aluminum thin film/ethylene-propylene random copolymer film (fourth sealant layer) /ethylene-propylene random copolymer film (first sealant layer)/crosslinked homopolypropylene film (second sealant layer) /ethylene-propylene random copolymer film (third sealant layer) were sequentially laminated, was prepared.

**Comparative Example 1: Preparation of Pouch Film Laminate**

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film, a 60 $\mu$m thick polypropylene homopolymer film, and a 10 $\mu$m thick ethylene-propylene random copolymer film were sequentially laminated on the other surface of the aluminum thin film by a coextrusion method.

As a result, a pouch film laminate having a structure, in which the polyethylene terephthalate/second adhesive film/nylon film/first adhesive film/aluminum thin film/ethylene-propylene random copolymer film/polypropylene homopolymer film/ethylene-propylene random copolymer film were sequentially laminated, was prepared.

**Comparative Example 2: Preparation of Pouch Film Laminate**

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film, a 60 $\mu$m thick ethylene-propylene random copolymer film, and a 10 $\mu$m thick ethylene-propylene random copolymer film were sequentially laminated on the other surface of the aluminum thin film by a coextrusion method. An ethylene monomer was included in an amount of 15 wt% in the ethylene-propylene random copolymer film.

As a result, a pouch film laminate having a structure, in which the polyethylene terephthalate/second adhesive film/nylon film/first adhesive film/aluminum thin film/ethylene-propylene random copolymer film/ethylene-propylene random copolymer film/ethylene-propylene random copolymer film were sequentially laminated, was prepared.

**Comparative Example 3: Preparation of Pouch Film Laminate**

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film, a 30 $\mu$m thick ethylene-propylene random copolymer film, a 30 $\mu$m thick crosslinked homopolypropylene film, and a 10 $\mu$m thick ethylene-propylene random copolymer film were sequentially laminated on the other surface of the aluminum thin film by a coextrusion method. In this case, an ethylene monomer was included in an amount of 15 wt% in the ethylene-propylene random copolymer film, and a degree of crosslinking of crosslinked homopolypropylene in the crosslinked homopolypropylene film was 50%.

As a result, a pouch film laminate having a structure, in which the polyethylene terephthalate/second adhesive film/nylon film/first adhesive film/aluminum thin film/ethylene-propylene random copolymer film/crosslinked homopolypropylene film/ethylene-propylene random copolymer film were sequentially laminated, was prepared.

**Comparative Example 4: Preparation of Pouch Film Laminate**

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film, a 30 $\mu$m thick ethylene-propylene random copolymer film, a 30 $\mu$m thick crosslinked homopolypropylene film, and a 10 $\mu$m thick ethylene-propylene random copolymer film were sequentially laminated on the other surface of the aluminum thin film by a coextrusion method. In this case, an ethylene monomer was included in an amount of 15 wt% in the ethylene-propylene random copolymer film, and a degree of crosslinking of crosslinked homopolypropylene in the crosslinked homopolypropylene film was 85%.

As a result, a pouch film laminate having a structure, in which the polyethylene terephthalate/second adhesive film/nylon film/first adhesive film/aluminum thin film/ethylene-propylene random copolymer film/crosslinked homopolypropylene film/ethylene-propylene random copolymer film were sequentially laminated, was prepared.

**Comparative Example 5: Preparation of Pouch Film Laminate**

A first adhesive film having a thickness of 3 $\mu$m, a nylon film having a thickness of 15 $\mu$m, a second adhesive film having a thickness of 3 $\mu$m, and a polyethylene terephthalate (PET) film having a thickness of 12 $\mu$m were sequentially laminated on one surface of an aluminum thin film having a thickness of 40 $\mu$m. A 10 $\mu$m thick ethylene-propylene random copolymer film, a 30 $\mu$m thick polypropylene homopolymer film, a 30 $\mu$m thick crosslinked homopolypropylene film, and a 10 $\mu$m thick ethylene-propylene random copolymer film were sequentially laminated on the other surface of the aluminum thin film by a coextrusion method. In this case, a degree of crosslinking of crosslinked homopolypropylene in the crosslinked homopolypropylene film was 60%.

As a result, a pouch film laminate having a structure, in which the polyethylene terephthalate/second adhesive film/nylon film/first adhesive film/aluminum thin film/ethylene-propylene random copolymer film/crosslinked homopolypropylene film/ethylene-propylene random copolymer film were sequentially laminated, was prepared.

Laminated structures of the above-prepared sealant layers of Examples 1 to 3 and Comparative Examples 1 to 5 are presented in Table 1 below. In this case, in Table 1, each of the laminated films of the sealant layer was numbered 1 to 4 in order from the layer closest to the aluminum thin film to the outermost layer.

[Table 1]

| | | Sealant layer | | | |
|---|---|---|---|---|---|
| | | 1 (Type/Thickness) | 2 (Type/Thickness/Ethylene monomer amount) | 3 (Type/Thickness/Degree of crosslinking) | 4 (Type/ Thickness) |
| | Example 1 | Ethylene-propylene random copoly-mer/10 $\mu$m | Ethylene-propylene ran-dom copolymer/30 $\mu$m/15 wt% | Crosslinked homo-polyprop ylene/30 $\mu$m/60% | Ethylene-propylene random copoly-mer/10 $\mu$m |
| | Example 2 | Ethylene-propylene random copoly-mer/10 $\mu$m | Ethylene-propylene ran-dom copolymer/20 $\mu$m/15 wt% | Crosslinked homo-polyprop ylene/40 $\mu$m/60% | Ethylene-propylene random copoly-mer/10 $\mu$m |
| | Example 3 | Ethylene-propylene random copolymer/10 $\mu$m | Ethylene-propylene ran-dom copolymer/40 $\mu$m/15 wt% | Crosslinked homo-polyprop ylene/20 $\mu$m/60% | Ethylene-propylene random copolymer/10 $\mu$m |
| | Comparati ve Example 1 | Ethylene-propylene random copoly-mer/10 $\mu$m | Polypropylene homopolymer/60 $\mu$m | | Ethylene-propylene random copoly-mer/10 $\mu$m |
| | Comparati ve Example 2 | Ethylene-propylene random copoly-mer/10 $\mu$m | Ethylene-propylene random copolymer/60 $\mu$m/15 wt% | | Ethylene-propylene random copoly-mer/10 $\mu$m |
| | Comparati ve Example 3 | Ethylene-propylene random copoly-mer/10 $\mu$m | Ethylene-propylene ran-dom copolymer/30 $\mu$m/15 wt% | Crosslinked homo-polyprop ylene/30 $\mu$m/50% | Ethylene-propylene random copoly-mer/10 $\mu$m |

(continued)

| | Sealant layer | | | |
|---|---|---|---|---|
| | 1 (Type/Thickness) | 2 (Type/Thickness/Ethylene monomer amount) | 3 (Type/Thickness/Degree of crosslinking) | 4 (Type/ Thickness) |
| Comparative Example 4 | Ethylene-propylene random copolymer/10 μm | Ethylene-propylene random copolymer/30 μm/15 wt% | Crosslinked homo-polypropylene/30 μm/85% | Ethylene-propylene random copolymer/10 μm |
| Comparative Example 5 | Ethylene-propylene random copolymer/10 μm | Polypropylene homopolymer/ 30 μm | Crosslinked homo-polypropylene/30 μm/60% | Ethylene-propylene random copolymer/10 μm |

**Experimental Example 1: Evaluation of Sealability of Pouch Type Battery Case**

After each of the pouch film laminates prepared in Examples 1 to 3 and Comparative Examples 1 to 5 was cut to a size of 266 mm in width and 200 mm in length and then folded in half to a size of 133 mm × 200 mm such that the sealant layers were in contact with each other, pouch type battery cases having a sealing portion formed therein were prepared by sealing an end of a long side (200 mm) for 1.6 seconds, 3 seconds, or 5 seconds, respectively, under conditions of a seal bar area of 200 mm × 8 mm, 200°C, and 0.1 MPa, and sealing strength of the pouch type battery case was measured according to each sealing time.

Specifically, the sealing strength was calculated from a maximum value of tensile strength which was measured by cutting the sealing portion formed in the pouch type battery case at an interval of 15 mm and pulling it in a 180° direction at a speed of 5 mm/min at room temperature using a universal testing machine (UTM).

Based on the sealing strength calculated, whether or not the pouch film laminates prepared in Examples 1 to 3 and Comparative Examples 1 to 5 were sealed is presented in Table 2 below.

-○: a case where the measured sealing strength was 10 kgf or more
-×: a case where the measured sealing strength was less than 10 kgf

[Table 2]

| | Sealing time | | |
|---|---|---|---|
| | Sealing for 1.6 seconds | Sealing for 3 seconds | Sealing for 5 seconds |
| Example 1 | ○ | ○ | ○ |
| Example 2 | ○ | ○ | ○ |
| Example 3 | ○ | ○ | ○ |
| Comparative Example 1 | × | ○ | ○ |
| Comparative Example 2 | ○ | ○ | ○ |
| Comparative Example 3 | ○ | ○ | ○ |
| Comparative Example 4 | × | ○ | ○ |
| Comparative Example 5 | × | × | ○ |

Referring to Table 2, sealing strengths were 10 kgf or more even in a case where the pouch type battery cases prepared by using the pouch film laminates prepared in Examples 1 to 3 were sealed for 1.6 seconds, wherein it may be confirmed that sealability was excellent. In contrast, with respect to the pouch type battery cases prepared by using the pouch film laminates prepared in Comparative Examples 1, 4, and 5, since sealing strength was insufficient when the sealing was performed for 1.6 seconds, the pouch type battery cases were not sealed, and it may be confirmed that sealability may be secured when the sealing time was 3 seconds or more. Particularly, with respect to the pouch type battery case prepared by using the pouch film laminate prepared in Comparative Example 5, it may be understood that time required to secure sufficient sealability increased to 5 seconds or more. Accordingly, in a case in which the pouch film laminates prepared in Examples 1 to 3 were used, it may be understood that the sealing time may be significantly reduced in comparison to a case where the pouch film laminates prepared in Comparative Examples 1, 4, and 5 were used.

**Experimental Example 2: Evaluation of Insulation Resistance of the Pouch Type Battery Case**

After each of the pouch film laminates prepared in Examples 1 to 3 and Comparative Examples 1 to 5 was cut to a size of 266 mm in width and 200 mm in length and then folded in half to a size of 133 mm × 200 mm such that the sealant layers were in contact with each other, a pouch type battery case having a sealing portion formed therein was prepared by sealing an end of a long side (200 mm) for 3 seconds under conditions of a seal bar area of 200 mm × 8 mm, 200°C, and 0.1 MPa.

Insulation resistance of the above-prepared pouch type battery case was measured. Specifically, the insulation resistance was measured by a method in which a resistance value 5 seconds after applying 100 V was checked using a resistance meter (RM3544-01) by HIOKI E.E. Corporation. Measurement results are presented in Table 3 below.

[Table 3]

|  | Insulation resistance [MΩ] |
|---|---|
| Example 1 | 1676 |
| Example 2 | 1598 |
| Example 3 | 1507 |
| Comparative Example 1 | 1520 |
| Comparative Example 2 | 175 |
| Comparative Example 3 | 603 |
| Comparative Example 4 | 279 |
| Comparative Example 5 | 1666 |

Referring to Table 3, it may be confirmed that the pouch type battery cases, which were prepared by using the pouch film laminates prepared in Examples 1 to 3, had better insulation resistance than the pouch type battery cases which were prepared by using the pouch film laminates prepared in Comparative Examples 1 to 5. Particularly, with respect to the pouch type battery cases which were prepared by using the pouch film laminates prepared in Examples 1 to 3 in which the degree of crosslinking of the crosslinked polypropylene film satisfied a range of 52% to 80%, it may be confirmed that the insulation resistances were significantly better than those of the pouch type battery cases prepared by using the pouch film laminates prepared in Comparative Examples 2, 3, and 4 in which the degree of crosslinking did not satisfy the range. Also, with respect to the pouch type battery case which was prepared by using the pouch film laminate prepared in Example 1, it may be confirmed that the insulation resistance was better than those of the pouch type battery cases which were prepared by using the pouch film laminates prepared in Examples 2 and 3 in which the thicknesses of the first sealant layer and the second sealant layer were adjusted.

(Description of the Symbols)

100:     Pouch Film Laminate
110:     Base Material Layer
112:     First Base Material Layer
114:     Second Base Material Layer
120:     Gas Barrier Layer
130:     Sealant Layer
132:     First Sealant Layer
134:     Second Sealant Layer
136:     Third Sealant Layer
138:     Fourth Sealant Layer
200:     Pouch Type Secondary Battery
210:     Pouch Type Case
220:     First Case

222: Cup Portion
224: Accommodation Portion
230: Second Case
232: Cup Portion
240: Bridge Portion
250: Sealing Portion
260: Electrode Assembly
270: Electrode Tab
272: Positive Electrode Tab
274: Negative Electrode Tab
280: Electrode Lead
282: Positive Electrode Lead
284: Negative Electrode Lead
290: Insulating Portion

**Claims**

1.  A pouch film laminate in which a base material layer, a gas barrier layer, and a sealant layer are sequentially laminated,

    wherein the sealant layer comprises a first sealant layer including a polypropylene random copolymer and a second sealant layer including crosslinked polypropylene, and
    a degree of crosslinking of the crosslinked polypropylene is in a range of 52% to 80%.

2.  The pouch film laminate of claim 1, wherein the first sealant layer comprises at least one selected from the group consisting of an ethylene-propylene random copolymer and a butene-propylene random copolymer.

3.  The pouch film laminate of claim 1, wherein the second sealant layer comprises crosslinked homopolypropylene.

4.  The pouch film laminate of claim 1, wherein an ethylene monomer of the polypropylene random copolymer is included in an amount of 5 wt% to 50 wt% based on a total weight of the first sealant layer.

5.  The pouch film laminate of claim 1, wherein a ratio (A/B) of a thickness (A) of the first sealant layer to a thickness (B) of the second sealant layer is in a range of 0.6 to 1.5.

6.  The pouch film laminate of claim 1, wherein the sealant layer has a thickness of 30 $\mu$m to 130 $\mu$m.

7.  The pouch film laminate of claim 1, wherein, when the pouch film laminate is sealed at 200°C and 0.1 MPa for 3 seconds, insulation resistance of the pouch film laminate is 1,000 MΩ or more.

8.  The pouch film laminate of claim 1, wherein the sealant layer has a melting temperature of 120°C to 150°C.

9.  The pouch film laminate of claim 1, wherein a ratio ($D_S/D_A$) of a total thickness ($D_S$) of the two pouch film laminates when sealing the two pouch film laminates at 200°C and 0.1 MPa for 3 seconds to a total thickness ($D_A$) of the two pouch film laminates before the sealing is in a range of 0.2 to 0.6.

10. The pouch film laminate of claim 1, wherein the sealant layer further comprises a third sealant layer as an outermost layer,
    wherein the third sealant layer comprises a polypropylene random copolymer.

11. The pouch film laminate of claim 10, wherein the sealant layer is one in which the first sealant layer, the second sealant layer, and the third sealant layer are sequentially laminated.

12. A pouch type battery case which is prepared by forming the pouch film laminate of any one of claims 1 to 11.

13. A pouch type secondary battery comprising:

    a pouch type battery case prepared by forming the pouch film laminate of any one of claims 1 to 11; and
    an electrode assembly accommodated in the pouch type battery case.

【FIG 1】

【FIG 2】

【FIG 3】

## INTERNATIONAL SEARCH REPORT

| International application No. |
| --- |
| **PCT/KR2024/017516** |

| A. | CLASSIFICATION OF SUBJECT MATTER |
| --- | --- |

**B32B 27/08**(2006.01)i; **B32B 27/32**(2006.01)i; **B32B 27/34**(2006.01)i; **B32B 15/08**(2006.01)i; **B32B 15/18**(2006.01)i; **B32B 27/18**(2006.01)i; **H01M 50/105**(2021.01)i; **H01M 50/126**(2021.01)i; **H01M 50/131**(2021.01)i

According to International Patent Classification (IPC) or to both national classification and IPC

| B. | FIELDS SEARCHED |
| --- | --- |

Minimum documentation searched (classification system followed by classification symbols)

B32B 27/08(2006.01); H01M 2/02(2006.01); H01M 2/06(2006.01); H01M 50/10(2021.01); H01M 50/183(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파우치(pouch), 전지(battery), 공중합체(copolymer), 가교 폴리프로필렌 (crosslinked polypropylene), 실런트(sealant), 용융 온도(melting temperature), 케이스(case)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2015-0114470 A (DAI NIPPON PRINTING CO., LTD.) 12 October 2015 (2015-10-12) See paragraphs [0239], [0282]-[0285], [0290], [0296], [0307]-[0318], [0331]-[0335], [0346], [0353], [0390]-[0393], [0561]-[0569], [0572]-[0578] and [0598]; and figures 1 and 2. | 1-13 |
| Y | KR 10-2018-0086143 A (LG CHEM, LTD.) 30 July 2018 (2018-07-30) See paragraphs [0022], [0025]-[0027], [0033] and [0035]. | 1-13 |
| A | KR 10-2013-0118867 A (TOPPAN PRINTING CO., LTD.) 30 October 2013 (2013-10-30) See claims 1-25. | 1-13 |
| A | JP 2002-319378 A (DAINIPPON PRINTING CO., LTD.) 31 October 2002 (2002-10-31) See claims 1-9. | 1-13 |
| A | JP 2017-004765 A (TOPPAN PRINTING CO., LTD.) 05 January 2017 (2017-01-05) See claims 1-6. | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 February 2025** | **13 February 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/017516**

| Patent document cited in search report | | | Publication date (day/month/year) | Patent family member(s) | | | Publication date (day/month/year) |
|---|---|---|---|---|---|---|---|
| KR | 10-2015-0114470 | A | 12 October 2015 | CN | 104969378 | A | 07 October 2015 |
| | | | | EP | 2955770 | A1 | 16 December 2015 |
| | | | | JP | 2014-170720 | A | 18 September 2014 |
| | | | | JP | 2014-170721 | A | 18 September 2014 |
| | | | | JP | 2014-170722 | A | 18 September 2014 |
| | | | | JP | 2014-220172 | A | 20 November 2014 |
| | | | | JP | 2015-032574 | A | 16 February 2015 |
| | | | | JP | 2015-035325 | A | 19 February 2015 |
| | | | | JP | 2015-035326 | A | 19 February 2015 |
| | | | | JP | 2015-050111 | A | 16 March 2015 |
| | | | | JP | 5626392 | B2 | 19 November 2014 |
| | | | | JP | 5626393 | B2 | 19 November 2014 |
| | | | | JP | 5626394 | B2 | 19 November 2014 |
| | | | | JP | 5626404 | B1 | 19 November 2014 |
| | | | | JP | 5660176 | B1 | 28 January 2015 |
| | | | | JP | 5668812 | B1 | 12 February 2015 |
| | | | | JP | 5668813 | B1 | 12 February 2015 |
| | | | | JP | 5704199 | B2 | 22 April 2015 |
| | | | | KR | 10-2231414 | B1 | 25 March 2021 |
| | | | | US | 10347877 | B2 | 09 July 2019 |
| | | | | US | 2015-0372263 | A1 | 24 December 2015 |
| | | | | WO | 2014-123164 | A1 | 14 August 2014 |
| KR | 10-2018-0086143 | A | 30 July 2018 | KR | 10-2018-0086153 | A | 30 July 2018 |
| | | | | KR | 10-2379221 | B1 | 28 March 2022 |
| | | | | KR | 10-2379222 | B1 | 28 March 2022 |
| KR | 10-2013-0118867 | A | 30 October 2013 | CN | 103155207 | A | 12 June 2013 |
| | | | | EP | 2629348 | A1 | 21 August 2013 |
| | | | | HK | 1183164 | A1 | 13 December 2013 |
| | | | | JP | 2013-258162 | A | 26 December 2013 |
| | | | | JP | 2014-130845 | A | 10 July 2014 |
| | | | | JP | 2014-139945 | A | 31 July 2014 |
| | | | | JP | 2014-146603 | A | 14 August 2014 |
| | | | | JP | 2018-022690 | A | 08 February 2018 |
| | | | | JP | 5637276 | B2 | 10 December 2014 |
| | | | | JP | 5742995 | B2 | 01 July 2015 |
| | | | | JP | 6076284 | B2 | 08 February 2017 |
| | | | | JP | 6465176 | B2 | 06 February 2019 |
| | | | | KR | 10-1840499 | B1 | 20 March 2018 |
| | | | | TW | 201230449 | A | 16 July 2012 |
| | | | | TW | I511351 | B | 01 December 2015 |
| | | | | US | 2013-0209868 | A1 | 15 August 2013 |
| | | | | US | 9123922 | B2 | 01 September 2015 |
| | | | | WO | 2012-050182 | A1 | 19 April 2012 |
| JP | 2002-319378 | A | 31 October 2002 | None | | | |
| JP | 2017-004765 | A | 05 January 2017 | CN | 106252532 | A | 21 December 2016 |
| | | | | CN | 106252533 | A | 21 December 2016 |
| | | | | CN | 113871764 | A | 31 December 2021 |
| | | | | CN | 206003843 | U | 08 March 2017 |
| | | | | JP | 2017-050168 | A | 09 March 2017 |
| | | | | JP | 6728579 | B2 | 22 July 2020 |

Form PCT/ISA/210 (patent family annex) (July 2022)

**INTERNATIONAL SEARCH REPORT**
Information on patent family members

International application No.

**PCT/KR2024/017516**

| Patent document cited in search report | Publication date (day/month/year) | Patent family member(s) | | Publication date (day/month/year) |
|---|---|---|---|---|
| | | JP 6728600 | B2 | 22 July 2020 |
| | | KR 10-2018-0017014 | A | 20 February 2018 |
| | | KR 10-2701922 | B1 | 02 September 2024 |
| | | US 11081748 | B2 | 03 August 2021 |
| | | US 2018-0102514 | A1 | 12 April 2018 |
| | | WO 2016-199754 | A1 | 15 December 2016 |

Form PCT/ISA/210 (patent family annex) (July 2022)

**EP 4 763 515 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230176099

- KR 1020240156612